# EUROPEAN PATENT APPLICATION

(11) **EP 4 672 440 A1**
(43) Date of publication of application: **31.12.2025**
(21) Application number: 25185473.3
(22) Date of filing: 26.06.2025
(51) Int. Cl.: H01M 50/107, H01M 50/152, H01M 50/342, H01M 50/102, H01M 50/148, H01M 50/528, H01M 50/531

(54) **END COVER ASSEMBLY, ENERGY STORAGE DEVICE, AND ELECTRICITY-CONSUMPTION APPARATUS**

(30) Priority: 28.06.2024 CN 202410866617
(71) Applicant: Xiamen Hithium Energy Storage Technology Co., Ltd., Xiamen, Fujian 361100 (CN)
(72) Inventor: ZENG, Ting, Xiamen, 361100 (CN); YANG, Weiqiang, Xiamen, 361100 (CN); ZHANG, Min, Xiamen, 361100 (CN); ZHOU, Wenyang, Xiamen, 361100 (CN)
(74) Representative: Manitz Finsterwald Patent- und Rechtsanwaltspartnerschaft mbB

(57) **Abstract**

The present disclosure provides an end cover assembly, an energy storage device, and an electricity-consumption apparatus. The end cover assembly includes a cover plate, an explosion-proof valve, and a current collector plate. The cover plate has a first surface and a second surface that are opposite to each other. The cover plate has a mounting hole and an explosion-proof hole that are spaced apart from each other. The explosion-proof valve is mounted at the cover plate and covers the explosion-proof hole. The current collector plate includes a main body portion, a first step portion, and a second step portion. The main body portion is located at a side of the first surface facing away from the second surface. The first step portion is disposed at the first face of the main body and abuts with the first surface. The second step portion passes through the mounting hole.

## Description

### FIELD

The present disclosure relates to the technical field of energy storage, and in particular, to an end cover assembly, an energy storage device, and an electricity-consumption apparatus.

### BACKGROUND

An energy storage device such as a secondary battery is widely used as a main power source of an electricity-consumption apparatus due to a recyclable characteristic of the energy storage device. With the increasing demand for the energy storage device, people's requirements for various performances of the energy storage device are also getting higher and higher. In the existing energy storage device, an exhaust channel between a current collector plate and a cover plate is narrow, resulting in unsmooth exhaust of the energy storage device. A gas inside the energy storage device is unable to smoothly impact an explosion-proof valve, causing the explosion-proof valve to fail to open and relieve pressure timely when thermal runaway occurs in the energy storage device, reducing safety of the energy storage device.

### SUMMARY

The present disclosure provides an end cover assembly, an energy storage device, and an electricity-consumption apparatus, which can make the energy storage device exhaust smoothly and ensure that a gas inside the energy storage device smoothly impacts an explosion-proof valve, to ensure that the explosion-proof valve can open and relieve pressure timely when thermal runaway occurs in the energy storage device. Therefore, it is beneficial to improving safety of the energy storage device.

In a first aspect, the present disclosure provides an end cover assembly for an energy storage device. The end cover assembly includes a cover plate, an explosion-proof valve, and a current collector plate. The cover plate has a first surface and a second surface that are opposite to each other in a thickness direction of the cover plate. The cover plate has a mounting hole and an explosion-proof hole, the mounting hole and the explosion-proof hole both penetrating the first surface and the second surface in the thickness direction of the cover plate and being spaced apart from each other. The cover plate is further provided with a first limiting protrusion, a second limiting protrusion, a third limiting protrusion, and a fourth limiting protrusion. Each of the first limiting protrusion, the second limiting protrusion, the third limiting protrusion, and the fourth limiting protrusion is disposed at the first surface and spaced apart from both the mounting hole and the explosion-proof hole. The first limiting protrusion and the second limiting protrusion are respectively located at two opposite sides of the explosion-proof hole. The third limiting protrusion and the fourth limiting protrusion are respectively located at the two opposite sides of the explosion-proof hole and spaced apart from the first limiting protrusion and the second limiting protrusion. The third limiting protrusion and the fourth limiting protrusion are respectively located at sides of the first limiting protrusion and the second limiting protrusion facing towards the mounting hole. The explosion-proof valve is mounted at the cover plate and covering the explosion-proof hole. The explosion-proof valve has a center line parallel to a length direction of the explosion-proof valve and passing through the first limiting protrusion and the second limiting protrusion. The explosion-proof valve further includes a notch portion and a connection portion, the notch portion having a first endpoint and a second endpoint spaced apart from each other, the connection portion being fixedly connected between the first endpoint and the second endpoint and located at a side of the explosion-proof valve away from the mounting hole. The current collector plate includes a main body portion, a first step portion, and a second step portion. The main body portion is located at a side of the first surface facing away from the second surface and arranged opposite to the first limiting protrusion, the second limiting protrusion, the third limiting protrusion, and the fourth limiting protrusion. The main body portion has a first face and a second face that are opposite to each other in a thickness direction of the main body portion. The main body portion has a through hole penetrating the first face and the second face in the thickness direction of the main body portion, the through hole being arranged opposite to the explosion-proof valve and offset from the limiting protrusions. The first step portion is disposed at the first face, a surface of the first step portion facing away from the main body portion abutting the first surface. The first step portion has a greater height than each of the first limiting protrusion, the second limiting protrusion, the third limiting protrusion, and the fourth limiting protrusion. The second step portion is fixedly connected to the surface of the first step portion facing away from the main body portion and disposed in the mounting hole by passing through the mounting hole.

A first connection line is defined between a center of the first limiting protrusion and a center of the mounting hole, a second connection line is defined between a center of the second limiting protrusion and the center of the mounting hole, a third connection line is defined between a center of the third limiting protrusion and the center of the mounting hole, and a fourth connection line is defined between a center of the fourth limiting protrusion and the center of the mounting hole. An angle α between the first connection line and the second connection line is smaller than an angle β between the third connection line and the fourth connection line.

The third limiting protrusion and the fourth limiting protrusion are located on a straight line defined by an edge of the explosion-proof valve adjacent to the mounting hole.

The cover plate further has a first groove, a second groove, a third groove, and a fourth groove, an opening of each of the first groove, the second groove, the third groove, and the fourth groove being located on the second surface. The first groove, the second groove, the third groove, and the fourth groove are arranged at intervals from one another and spaced apart from both the mounting hole and the explosion-proof hole. In the thickness direction of the cover plate, the first groove is aligned with the first limiting protrusion, the second groove is aligned with the second limiting protrusion, the third groove is aligned with the third limiting protrusion, and the fourth groove is aligned with the fourth limiting protrusion.

The main body portion further has a welding groove having an opening located on the first face. The welding groove is spaced apart from the through hole, and the welding groove is offset from each of the first limiting protrusion, the second limiting protrusion, the third limiting protrusion, the fourth limiting protrusion, and the explosion-proof valve in a thickness direction of the end cover assembly.

A plurality of through holes and a plurality of welding grooves are provided. The plurality of welding grooves is arranged at intervals around a center of the main body portion, and at least one of the plurality of through holes is disposed between two adjacent welding grooves of the plurality of welding grooves. An orthographic projection of each of the first limiting protrusion, the second limiting protrusion, the third limiting protrusion, the fourth limiting protrusion, and the explosion-proof valve on the main body portion is located between two adjacent welding grooves of the plurality of welding grooves in the thickness direction of the end cover assembly.

The welding groove includes a bottom wall and a first sidewall adjacent to the first step portion. The first sidewall is fixedly connected to the bottom wall. The main body portion further has a stress relief hole penetrating the main body portion and the first sidewall in the thickness direction of the main body portion.

The welding groove further includes two second sidewalls that are each fixedly connected to the bottom wall. In a width direction of the welding groove, the two second sidewalls are respectively connected to two opposite sides of the first sidewall. The stress relief hole further penetrates corresponding one of the two second sidewalls in the thickness direction of the main body portion.

A plurality of stress relief holes is provided. Every two stress relief holes of the plurality of stress relief holes penetrate the first sidewall of one of the plurality of welding grooves and respectively penetrate the two second sidewalls.

In a second aspect, the present disclosure also provides an energy storage device, including a housing, an electrode assembly, and the end cover assembly described in any one of the above items. The housing has an opening and an accommodation cavity. The electrode assembly is accommodated in the accommodation cavity. The opening is sealed by the end cover assembly, and the current collector plate is electrically connected to the electrode assembly.

In a third aspect, the present disclosure also provides an electricity-consumption apparatus, including the above-mentioned energy storage device. The energy storage device supplies power to the electricity-consumption apparatus.

In the end cover assembly provided by the present disclosure, by providing the first limiting protrusion, the second limiting protrusion, the third limiting protrusion, and the fourth limiting protrusion at the cover plate and making the first limiting protrusion, the second limiting protrusion, the third limiting protrusion, and the fourth limiting protrusion be arranged opposite to the main body portion of the current collector plate, when the gas inside the energy storage device impacts the current collector plate, the first limiting protrusion, the second limiting protrusion, the third limiting protrusion, and the fourth limiting protrusion may abut with the main body portion to limit the current collector plate and restrict a movement of the current collector plate towards the cover plate, which can prevent an exhaust channel between the cover plate and the main body portion of the current collector plate from being blocked due to the movement of the current collector plate towards the cover plate. Therefore, it is possible to make the energy storage device exhaust smoothly, ensure that the explosion-proof valve can open and relieve pressure timely when thermal runaway occurs in the energy storage device. Further, it is beneficial to improving the safety of the energy storage device and enhancing reliability of the energy storage device during use.

### BRIEF DESCRIPTION OF THE DRAWINGS

In order to illustrate the technical solutions of the embodiments of the present disclosure more clearly, the drawings required for the embodiments of the present disclosure will be described below.
FIG. 1 is a structural schematic view of an energy storage device provided by an embodiment of the present disclosure.
FIG. 2 is a structural schematic view of an end cover assembly in the energy storage device shown in FIG. 1.
FIG. 3 is an exploded structural schematic view of the end cover assembly shown in FIG. 2.
FIG. 4 is a cross-sectional structural schematic view of the end cover assembly shown in FIG. 2 taken along the line A-A.
FIG. 5 is a structural schematic view of a cover plate in the end cover assembly shown in FIG. 3.
FIG. 6 is a structural schematic view of the cover plate shown in FIG. 5 from another perspective.
FIG. 7 is a cross-sectional structural schematic view of the cover plate shown in FIG. 5 taken along the line B-B.
FIG. 8 is a structural schematic view of an explosion-proof valve in the end cover assembly shown in FIG. 3.
FIG. 9 is a structural schematic view of the cover plate shown in FIG. 6 and the explosion-proof valve after being assembled.
FIG. 10 is a structural schematic view of a current collector plate in the end cover assembly shown in FIG. 3.
FIG. 11 is a cross-sectional structural schematic view of the current collector plate shown in FIG. 10 taken along the line C-C.

Names corresponding to reference numerals in the drawings are as follows:
energy storage device 100, housing 110, end cover assembly 120, cover plate 10, current collector plate 20, explosion-proof valve 30, protection member 40, first surface 11, second surface 12, mounting hole 14, explosion-proof hole 15, mounting recess 16, first assembly recess 17, second assembly recess 18, groove 19, first sub-hole 141, second sub-hole 142, first groove 19a, second groove 19b, third groove 19c, fourth groove 19d, limiting protrusion 13, first limiting protrusion 13a, second limiting protrusion 13b, third limiting protrusion 13c, fourth limiting protrusion 13d, first connection line 101, second connection line 102, third connection line 103, fourth connection line 104, center line 301, notch portion 31, connection portion 32, welding portion 33, first bursting portion 34, second bursting portion 35, first endpoint 311, second endpoint 312, main body portion 21, boss portion 22, first face 211, second face 212, first step portion 221, second step portion 222, first sub-portion 222a, second sub-portion 222b, welding groove 23, through hole 24, liquid injection hole 25, stress relief hole 26, bottom wall 231, first sidewall 232, second sidewall 233, step portion 251, liquid injection portion 252.

### DETAILED DESCRIPTION

The technical solutions in the embodiments of the present disclosure will be clearly and completely described below in conjunction with the drawings in the embodiments of the present disclosure.

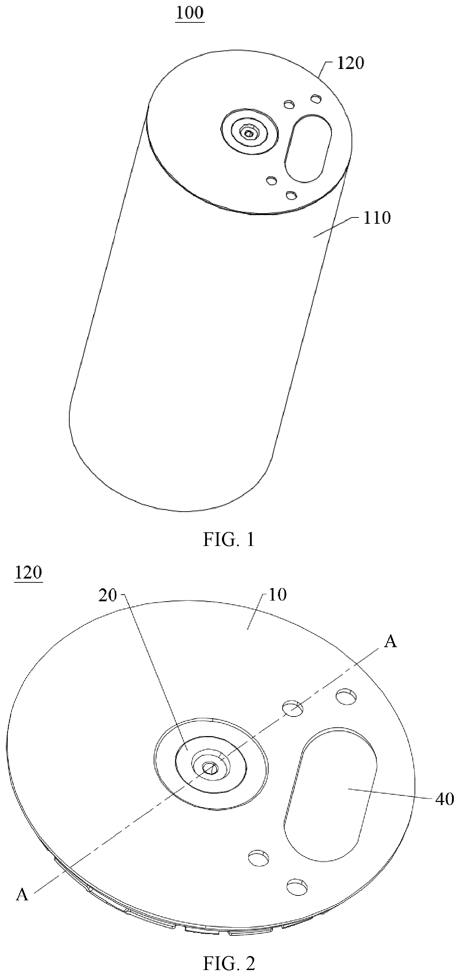

Referring to FIG. 1, FIG. 1 is a structural schematic view of an energy storage device 100 provided by an embodiment of the present disclosure.

In this embodiment, the energy storage device 100 is a cylindrical battery. The energy storage device 100 includes a housing 110, an end cover assembly 120, and an electrode assembly (not shown). Exemplarily, the housing 110 may be made of aluminum. The housing 110 is in a cylindrical shape. The housing 110 has an opening (not shown) and an accommodation cavity (not shown). The electrode assembly is accommodated in the accommodation cavity. Exemplarily, the electrode assembly is a wound electrode assembly. The electrode assembly includes a cell (not shown) and a tab (not shown). The tab is fixedly connected to the cell. The accommodation cavity is also used to accommodate an electrolyte, and the electrode assembly is immersed in the electrolyte. The end cover assembly 120 is mounted at a side of the housing 110 in a height direction of the housing 110, and the opening is sealed by the end cover assembly. In some other embodiments, the energy storage device 100 may also be a prismatic battery or other components with power storage functions.

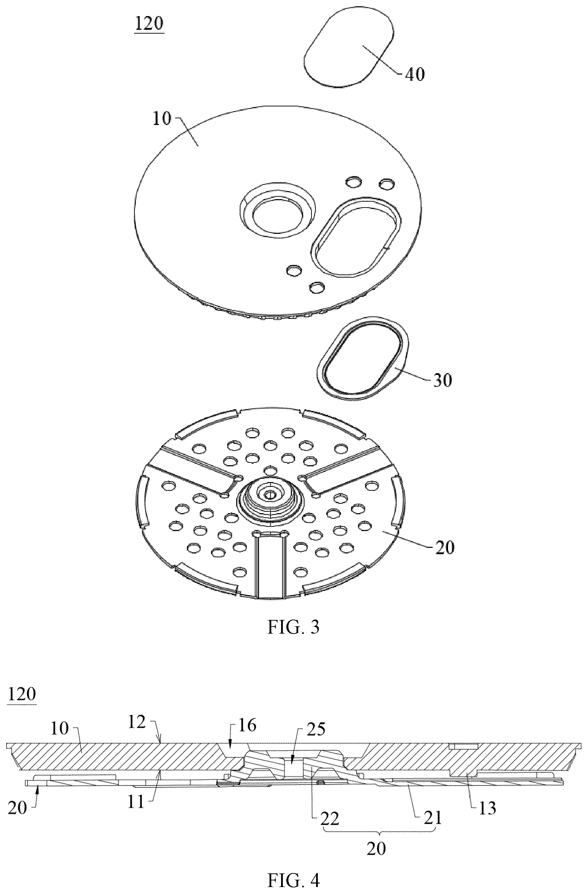

Referring to FIG. 2, FIG. 3, and FIG. 4, FIG. 2 is a structural schematic view of an end cover assembly 120 in the energy storage device 100 shown in FIG. 1. FIG. 3 is an exploded structural schematic view of the end cover assembly 120 shown in FIG. 2. FIG. 4 is a cross-sectional structural schematic view of the end cover assembly 120 shown in FIG. 2 taken along the line A-A. "Taken along the line A-A" means cutting along a plane where a line A-A is situated.

The end cover assembly 120 includes a cover plate 10, a current collector plate 20, an explosion-proof valve 30, and a protection member 40. The current collector plate 20 is mounted at an inner side of the housing 110 and is electrically connected to the tab of the cell. Exemplarily, the current collector plate 20 may be electrically connected to the tab of the electrode assembly by means of welding. The cover plate 10 is mounted at a side of the current collector plate 20 in a thickness direction of the current collector plate 20. Both the explosion-proof valve 30 and the protection member 40 are mounted at the cover plate 10 and are spaced apart from the current collector plate 20. In a thickness direction of the end cover assembly 120, the protection member 40 and the explosion-proof valve 30 are arranged opposite to each other and cover the explosion-proof valve 30. The protection member 40 is used to protect the explosion-proof valve 30 from damage caused by an external environment and an external force, preventing the explosion-proof valve 30 from being accidentally triggered and ensuring good reliability of the energy storage device 100 during use.

It needs to be noted that orientation words such as "outside" and "inside" involved in the present disclosure are all described as the orientation of the energy storage device 100 shown in FIG. 1. A direction towards an outer side of the housing 110 is defined as "outside", and a direction towards an inner side of the housing 110 is defined as "inside". Similar descriptions hereinafter can be understood in the same way.

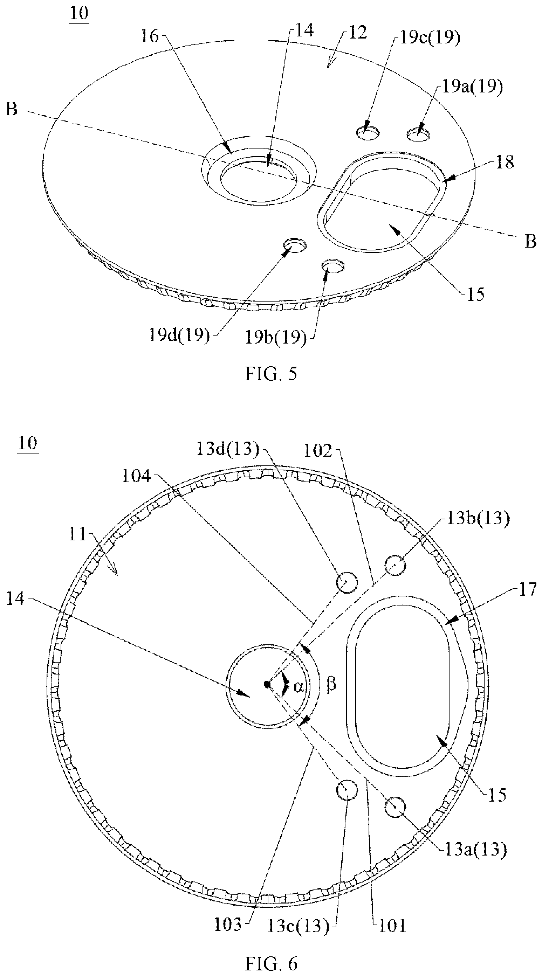

Referring to FIG. 4 and FIG. 5, FIG. 5 is a structural schematic view of a cover plate 10 in the end cover assembly 120 shown in FIG. 3.

In this embodiment, the cover plate 10 is generally in a disc shape. The cover plate 10 includes a first surface 11 and a second surface 12. In a thickness direction of the cover plate 10, the first surface 11 and the second surface 12 are opposite to each other. Specifically, the first surface 11 is a surface of the cover plate 10 facing towards the housing 110, and the second surface 12 is a surface of the cover plate 10 facing away from the housing 110.

The cover plate 10 further has a mounting hole 14, an explosion-proof hole 15, a mounting recess 16, a first assembly recess 17, a second assembly recess 18, and a groove 19. The mounting hole 14 and the explosion-proof hole 15 both penetrate the first surface 11 and the second surface 12 of the cover plate 10 in the thickness direction of the cover plate 10 and are spaced apart from each other. The mounting hole 14 is arranged in a middle region of the cover plate 10 and is used for mounting of the current collector plate 20. Exemplarily, the mounting hole 14 is a circular hole. A central axis of the mounting hole 14 is coaxial with a central axis of the cover plate 10. Specifically, the mounting hole 14 includes a first sub-hole 141 and a second sub-hole 142. The first sub-hole 141 is connected to a side of the second sub-hole 142 and is in communication with the second sub-hole 142. In a direction of the current collector plate 20 towards the cover plate 10, a diameter of the first sub-hole 141 gradually decreases. In this embodiment, the explosion-proof hole 15 is an oval-shaped hole. Exemplarily, an extending direction of the explosion-proof hole 15 is perpendicular to a radial direction of the cover plate 10.

Each of the first assembly recess 17 and the second assembly recess 18 is arranged around the explosion-proof hole 15 and is in communication with the explosion-proof hole 15. In the thickness direction of the cover plate 10, the first assembly recess 17 and the second assembly recess 18 are opposite to each other. Specifically, an opening of the first assembly recess 17 is located on the first surface 11. The first assembly recess 17 is recessed from the first surface 11 towards the second surface 12 and penetrates a wall surface of the explosion-proof hole 15 to be in communication with the explosion-proof hole 15. The first assembly recess 17 is used for mounting of the explosion-proof valve 30. An opening of the second assembly recess 18 is located on the second surface 12. The second assembly recess 18 is recessed from the second surface 12 towards the first surface 11 and penetrates a wall surface of the explosion-proof hole 15 to be in communication with the explosion-proof hole 15. The second assembly recess 18 is used for mounting of the protection member 40.

An opening of the mounting recess 16 and an opening of the groove 19 are both located on the second surface 12. Moreover, each of the mounting recess 16 and the groove 19 is recessed from the second surface 12 towards the first surface 11. Specifically, the mounting recess 16 is arranged around the mounting hole 14 and penetrates a wall surface of the mounting hole 14 to be in communication with the mounting hole 14. That is, the mounting recess 16 is spaced apart from each of the explosion-proof hole 15, the first assembly recess 17, and the second assembly recess 18.

In this embodiment, the groove 19 is spaced apart from each of the mounting recess 16, the mounting hole 14, the explosion-proof hole 15, the first assembly recess 17, and the second assembly recess 18. Exemplarily, a plurality of grooves 19 is provided. The plurality of grooves 19 are arranged at intervals from one another and are arranged at intervals around the explosion-proof hole 15. The plurality of grooves 19 may include a first groove 19a, a second groove 19b, a third groove 19c, and a fourth groove 19d. An opening of each of the first groove 19a, the second groove 19b, the third groove 19c, and the fourth groove 19d is located on the second surface 12. The first groove 19a, the second groove 19b, the third groove 19c, and the fourth groove 19d are arranged at intervals from one another. Moreover, each of the first groove 19a, the second groove 19b, the third groove 19c, and the fourth groove 19d is spaced apart from both the mounting hole 14 and the explosion-proof hole 15.

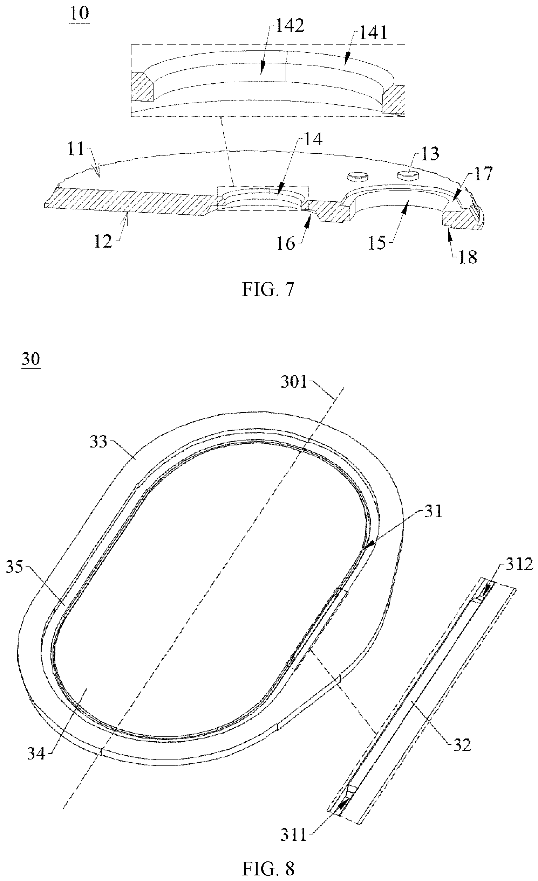

Referring to FIG. 4, FIG. 6, and FIG. 7, FIG. 6 is a structural schematic view of the cover plate 10 shown in FIG. 5 from another perspective, and FIG. 7 is a cross-sectional structural schematic view of the cover plate 10 shown in FIG. 5 taken along the line B-B.

The cover plate 10 is further provided with a limiting protrusion 13. The limiting protrusion 13 is disposed at the first surface 11 of the cover plate 10 and protrudes away from the cover plate 10 in the thickness direction of the cover plate 10. The limiting protrusion 13 is used to abut with the current collector plate 20 to limit the current collector plate 20. Specifically, the limiting protrusion 13 is arranged adjacent to the explosion-proof hole 15 and is spaced apart from the explosion-proof hole 15. In the thickness direction of the cover plate 10, the limiting protrusion 13 is aligned with the groove 19. That is, in the thickness direction of the cover plate 10, an orthographic projection of the limiting protrusion 13 on the second surface 12 of the cover plate 10 is located within the groove 19.

In this embodiment, the limiting protrusion 13 may be formed by stamping the cover plate 10 from the second surface 12 of the cover plate 10 towards the first surface 11, and the groove 19 is formed on the second surface 12. That is, the limiting protrusion 13 and the groove 19 are formed simultaneously in one stamping process, which can simplify manufacturing processes of the cover plate 10 and reduce production costs of the cover plate 10.

In this embodiment, a plurality of limiting protrusions 13 is provided. The plurality of limiting protrusions 13 are arranged around a peripheral side of the explosion-proof hole 15 and are arranged at intervals from one another. In the thickness direction of the cover plate 10, each limiting protrusion 13 is aligned with one corresponding groove. That is, in the thickness direction of the cover plate 10, an orthographic projection of each limiting protrusion 13 on the second surface 12 of the cover plate 10 is located within one corresponding groove 19.

Specifically, the plurality of limiting protrusions 13 includes a first limiting protrusion 13a, a second limiting protrusion 13b, a third limiting protrusion 13c, and a fourth limiting protrusion 13d. The first limiting protrusion 13a and the second limiting protrusion 13b are respectively located at two opposite sides of the explosion-proof hole 15. The third limiting protrusion 13c and the fourth limiting protrusion 13d are respectively located at the two opposite sides of the explosion-proof hole 15 and spaced apart from the first limiting protrusion 13a and the second limiting protrusion 13b, and the third limiting protrusion 13c and the fourth limiting protrusion 13d are respectively located at sides of the first limiting protrusion 13a and the second limiting protrusion 13b facing towards the mounting hole 14. That is, the first limiting protrusion 13a and the third limiting protrusion 13c are located at a side of the explosion-proof hole 15 in a length direction of the explosion-proof hole 15, and the second limiting protrusion 13b and the fourth limiting protrusion 13d are located at another side of the explosion-proof hole 15 in the length direction of the explosion-proof hole 15. In addition, in the thickness direction of the cover plate 10, the first limiting protrusion 13a is aligned with the first groove 19a, the second limiting protrusion 13b is aligned with the second groove 19b, the third limiting protrusion 13c is aligned with the third groove 19c, and the fourth limiting protrusion 13d is aligned with the fourth groove 19d.

In this embodiment, a first connection line 101 is defined between a center of the first limiting protrusion 13a and a center of the mounting hole 14, a second connection line 102 is defined between a center of the second limiting protrusion 13b and the center of the mounting hole 14, a third connection line 103 is defined between a center of the third limiting protrusion 13c and the center of the mounting hole 14, and a fourth connection line 104 is defined between a center of the fourth limiting protrusion 13d and the center of the mounting hole 14. An angle α between the first connection line 101 and the second connection line 102 is smaller than an angle β between the third connection line 103 and the fourth connection line 104.

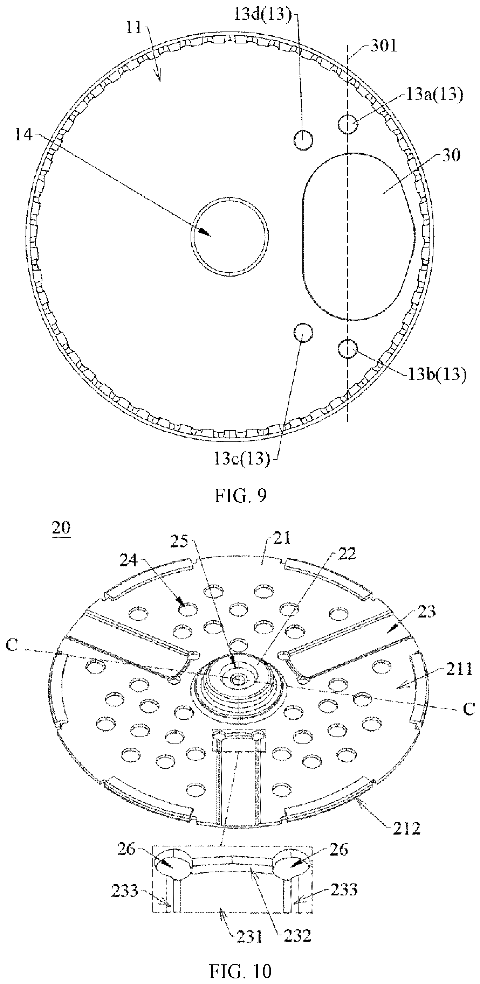

Referring to FIG. 3, FIG. 8, and FIG. 9, FIG. 8 is a structural schematic view of an explosion-proof valve 30 in the end cover assembly 120 shown in FIG. 3, and FIG. 9 is a structural schematic view of the cover plate 10 shown in FIG. 6 and the explosion-proof valve 30 after being assembled.

In this embodiment, the explosion-proof valve 30 is in the shape of an oval-shaped sheet. A length direction of the explosion-proof valve 30 is parallel to a length direction of the explosion-proof hole 15. Specifically, the explosion-proof valve 30 is mounted in the first assembly recess 17 and covers the explosion-proof hole 15. Exemplarily, the explosion-proof valve 30 may be welded to a wall of the first assembly recess 17. It can be understood that when an internal pressure of the energy storage device 100 is too high, the explosion-proof valve 30 will burst under the action of gas pressure, so that a gas inside the energy storage device 100 is discharged to the outside of the energy storage device 100 timely, preventing the energy storage device 100 from exploding due to excessive internal pressure. Therefore, the reliability of the energy storage device 100 during use can be improved, and a service life of the energy storage device 100 can be prolonged.

Specifically, the explosion-proof valve 30 has a center line 301. The center line 301 is parallel to a length direction of the explosion-proof valve 30 and passes through the first limiting protrusion 13a and the second limiting protrusion 13b. In this embodiment, the explosion-proof valve 30 further includes a notch portion 31, a connection portion 32, a welding portion 33, a first bursting portion 34, and a second bursting portion 35. The second bursting portion 35 is arranged around a peripheral side of the first bursting portion 34. The first bursting portion 34 and the second bursting portion 35 are connected by the notch portion 31 and the connection portion 32. Each of a thickness of the first bursting portion 34 and a thickness of the second bursting portion 35 is greater than a thickness of the notch portion 31. The welding portion 33 is fixedly connected to the second bursting portion 35 and is arranged around a peripheral side of the second bursting portion 35. It can be understood that when thermal runaway occurs in the energy storage device 100 , the first bursting portion 34 of the explosion-proof valve 30 bursts orderly along the notch portion 31, which makes the rupture of the explosion-proof valve 30 ordered and controllable and prevents formation of a plurality of splashing fragments by the explosion-proof valve 30 under the impact of pressure from damaging other elements near the energy storage device 100, which is helpful to reduce a thermal runaway region of the energy storage device 100 and makes the thermal runaway range of the energy storage device 100 controllable.

In this embodiment, the notch portion 31 is generally in a "C" shape. The notch portion 31 has a first endpoint 311 and a second endpoint 312. The first endpoint 311 and the second endpoint 312 are spaced apart from each other. The connection portion 32 is fixedly connected between the first endpoint 311 and the second endpoint 312 and located at a side of the explosion-proof valve 30 away from the mounting hole 14 of the cover plate 10. With this arrangement, a rupture position of the explosion-proof valve 30 may be located at a side adjacent to a center of the cover plate 10. When the explosion-proof valve 30 ruptures, the explosion-proof valve 30 will fold towards an edge of the cover plate 10, which can avoid a short-circuit problem caused by contact of a valve sheet of the folded explosion-proof valve 30 with a component arranged at the center of the cover plate 10, and thus is helpful in improving mounting reliability of the energy storage device 100.

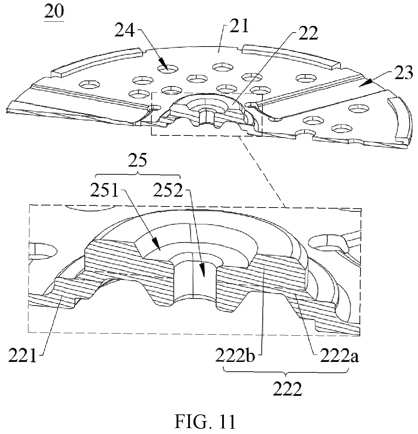

Referring to FIG. 4, FIG. 10, and FIG. 11, FIG. 10 is a structural schematic view of a current collector plate 20 in the end cover assembly 120 shown in FIG. 3, and FIG. 11 is a cross-sectional structural schematic view of the current collector plate 20 shown in FIG. 10 taken along the line C-C.

In this embodiment, the current collector plate 20 is made of a metal material. Exemplarily, the current collector plate 20 is made of aluminum. In this embodiment, the current collector plate 20 is in a disc shape. A central axis of the current collector plate 20 coincides with the central axis of the cover plate 10. Exemplarily, the current collector plate 20 is rotationally symmetrical about the central axis. The current collector plate 20 includes a main body portion 21 and a boss portion 22. In this embodiment, the main body portion 21 and the boss portion 22 are integrally formed. Exemplarily, the main body portion 21 and the boss portion 22 may be integrally formed by the stamping process.

Specifically, the main body portion 21 is located at a side of the first surface 11 of the cover plate 10 facing away from the second surface 12. The main body portion 21 has a first face 211 and a second face 212. In a thickness direction of the main body portion 21, the first face 211 and the second face 212 are opposite to each other. The first face 211 is a surface of the main body portion 21 facing towards the cover plate 10, and the second face 212 is a surface of the main body portion 21 facing away from the cover plate 10.

The boss portion 22 is fixedly connected to the first face 211 of the main body portion 21. In this embodiment, the boss portion 22 is used to be welded to the cover plate 10 to ensure that electrons from the electrode assembly inside the energy storage device 100 may be conducted to an external circuit through the end cover assembly 120, to realize an electrical connection between the energy storage device 100 and an external device. Specifically, the boss portion 22 includes a first step portion 221 and a second step portion 222. The second step portion 222 is fixedly connected to a side of the first step portion 221 facing away from the main body portion 21. A circumferential surface of the first step portion 221 is arranged around a circumferential surface of the second step portion 222 and protrudes relative to the circumferential surface of the second step portion 222. In the thickness direction of the end cover assembly 120, the first step portion 221 has a greater height than each of the first limiting protrusion 13a, the second limiting protrusion 13b, the third limiting protrusion 13c, and the fourth limiting protrusion 13d. The surface of the second step portion 222 facing away from the first step portion 221 (not marked) is a surface of the boss portion 22 facing away from the main body portion 21.

In this embodiment, the second step portion 222 includes a first sub-portion 222a and a second sub-portion 222b. The first sub-portion 222a is fixedly connected to the side of the first step portion 221 facing away from the main body portion 21, and the second sub-portion 222b is fixedly connected to a side of the first sub-portion 222a facing away from the main body portion 21. In a direction of the main body portion 21 towards the boss portion 22, a size of the first sub-portion 222a gradually decreases.

The current collector plate 20 further has a welding groove 23, a through hole 24, a liquid injection hole 25, and a stress relief hole 26. The welding groove 23, the through hole 24, and the stress relief hole 26 are each arranged in the main body portion 21 of the current collector plate. Specifically, an opening of the welding groove 23 is on the first face 211 of the main body portion 21. The welding groove 23 is recessed from the first face 211 towards the second face 212 and penetrates a circumferential side surface of the main body portion 21. Exemplarily, the welding groove 23 is in an elongated shape, extends in a radial direction of the main body portion 21, and penetrates a circumferential side surface of the current collector plate 20.

In this embodiment, the welding groove 23 includes a bottom wall 231, a first sidewall 232, and two second sidewalls 233. The bottom wall 231 protrudes away from the boss portion 22 from the main body portion 21. The bottom wall 231 of the welding groove 23 is used to be welded to the tab of the electrode assembly to realize an electrical connection between the electrode assembly and the current collector plate 20. It can be understood that the bottom wall 231 of the welding groove 23 protruding away from the boss portion 22 from the main body portion 21 can increase a welding area between the current collector plate 20 and the tab of the electrode assembly, allowing the current collector plate 20 to make close contact with the tab, which not only can avoid a poor welding and ensure a welding strength between the current collector plate 20 and the tab of the electrode assembly, but also can improve consistency of laser welding between the tab and the current collector plate 20. Each of the first sidewall 232 and the two second sidewalls 233 is fixedly connected to the bottom wall 231. Specifically, the first sidewall 232 is arranged adjacent to the first step portion 221 of the boss portion 22. In a width direction of the welding groove 23, the two second sidewalls 233 are respectively connected to two opposite sides of the first sidewall 232.

In this embodiment, a plurality of welding grooves 23 may be provided. The plurality of welding grooves 23 are arranged at intervals from one another around the central axis of the current collector plate 20 to ensure stability of the welding between the main body portion 21 of the current collector plate 20 and the tab of the electrode assembly. Exemplarily, there are three welding grooves 23. In some other embodiments, there may also be one, two, or more than four welding grooves 23. The number of welding grooves 23 is not specifically limited in the embodiments of the present disclosure.

In this embodiment, in the thickness direction of the main body portion 21, the stress relief hole 26 penetrates the main body portion 21 and the first sidewall 232 of the welding groove 23. In this embodiment, in the thickness direction of the main body portion 21, the stress relief hole 26 also penetrates the second sidewall 233. The stress relief hole 26 is used to release stress of the main body portion 21 of the current collector plate 20, avoiding cracking of the main body portion 21 due to excessive stress concentration. Exemplarily, a plurality of stress relief holes 26 is provided. Every two stress relief holes 26 penetrate the first sidewall 232 of one welding groove 23 and each penetrate one second sidewall 233. With this arrangement, the stress of the main body portion 21 of the current collector plate 20 may be further released, preventing a cracking of the main body portion 21 of the current collector plate 20 caused by stress concentration.

It should be understood that since the current collector plate 20 is made of aluminum and is relatively soft, during stamping formation of the current collector plate 20, the aluminum metal is likely to flow, resulting in a stress concentration problem occurring in some local positions of the first sidewall 232 and the second sidewall 233 of the welding groove 23 in the current collector plate 20 due to an increase in thickness, which causes the occurrence of the cracking problem of the current collector plate 20, and also reduces welding consistency between the tab of the electrode assembly and the current collector plate. In this embodiment, by providing the stress relief hole 26 and making the stress relief hole 26 penetrate the first sidewall 232 and the second sidewall 233, on the one hand, thickness consistency between the first sidewall 232, the second sidewall 233, and the bottom wall 231 of the welding groove 23 can be ensured, which is helpful to improve the welding consistency between the current collector plate 20 and the tab of the electrode assembly. On the other hand, the stress relief hole 26 can release stress at locally thickened positions of the first sidewall 232 and the second sidewall 233, which prevents stress concentration and density concentration situations from occurring at the locally thickened positions of the first sidewall 232 and the second sidewall 233, and thus can avoid cracking of the current collector plate 20 caused by the stress concentration. In addition, when the gas inside the energy storage device 100 impacts the current collector plate 20, the stress relief holes 26 formed in the current collector plate 20 may also play a role in exhausting gas, to make the current collector plate 20 less likely to deform when affected by an impact force of the gas, and prevent blockage of an exhaust channel between the current collector plate 20 and the cover plate 10 caused by arched deformation of the current collector plate 20 towards the cover plate 10. Therefore, it is helpful to ensure smooth discharge of the gas inside the energy storage device 100, and is thus beneficial to improving safety performance of the energy storage device 100.

The through hole 24 penetrates the current collector plate 20 in the thickness direction of the current collector plate 20. Specifically, the main body portion 21 of the current collector plate 20 has a through hole 24, and the through hole 24 penetrates the main body portion 21 in the thickness direction of the main body portion 21. In this embodiment, the through hole 24 is spaced apart from both the welding groove 23 and the stress relief hole 26. Exemplarily, the through hole 24 is a circular hole. In some other embodiments, the through hole 24 may also be a square hole or other special-shaped holes. In this embodiment, a plurality of through holes 24 is provided. The plurality of through holes 24 are arranged at intervals from one another. The plurality of through holes 24 form three groups of through holes which are arranged at intervals from one another around the central axis of the current collector plate 20. Two adjacent groups of through holes are respectively located at two opposite sides of one welding groove 23. In addition, when a plurality of welding grooves 23 is provided, at least one through hole 24 is disposed between two adjacent welding grooves 23.

In this embodiment, the liquid injection hole 25 penetrates the current collector plate 20 in the thickness direction of the current collector plate 20 and is spaced apart from both the through hole 24 and the welding groove 23. Specifically, an opening of the liquid injection hole 25 is located at a surface of the boss portion 22 facing away from the main body portion 21. The liquid injection hole 25 is recessed from the surface of the boss portion 22 facing away from the main body portion 21 towards the main body portion 21. Moreover, the liquid injection hole 25 penetrates the surface of the main body portion 21 facing away from the cover plate 10 and is in communication with the accommodation cavity of the housing 110. The central axis (not shown) of the liquid injection hole 25 coincides with the central axis of the current collector plate 20. It can be understood that the electrolyte may be injected into the accommodation cavity through the liquid injection hole 25 to realize filling of the electrolyte of the energy storage device 100. Since the central axis of the liquid injection hole 25 coincides with the central axis of the current collector plate 20, the electrolyte may quickly infiltrate the electrode assembly from a central position of the electrode assembly, to improve an infiltration effect of the electrode assembly in the electrolyte.

The liquid injection hole 25 includes a step portion 251 and a liquid injection portion 252. The liquid injection portion 252 is located at a side of the step portion 251 facing towards the main body portion 21 of the current collector plate 20 and is in communication with the step portion 251. Both the liquid injection portion 252 and the step portion 251 are circular holes. The step portion 251 is recessed from the surface of the boss portion 22 facing away from the main body portion 21 towards the main body portion 21, and a diameter of the step portion 251 gradually decreases in the recessed direction. That is, the step portion 251 is a conical hole to facilitate introduction of a liquid injection head of a liquid injection device. The liquid injection portion 252 is recessed from the surface of the main body portion 21 facing away from the boss portion 22 towards the step portion 251 and penetrates a bottom wall of the step portion 251. A diameter of the liquid injection portion 252 is smaller than the diameter of the step portion 251.

In addition, the end cover assembly 120 may further include a sealing member (not shown). The sealing member seals the liquid injection hole 25. A shape of the sealing member is the same as a shape of the liquid injection hole 25, to realize the sealing of the liquid injection hole 25.

Referring to FIG. 4 again, in the assembled end cover assembly 120, the boss portion 22 of the current collector plate 20 passes through the mounting hole 14 of the cover plate 10, and the liquid injection hole 25 on the boss portion 22 is exposed relative to the mounting hole 14. In other words, the mounting hole 14 exposes the liquid injection hole 25. Specifically, the surface of the first step portion 221 of the boss portion 22 facing towards the second step portion 222 abuts with the first surface 11 of the cover plate 10. With this arrangement, the cover plate 10 may be spaced apart from the main body portion 21 of the current collector plate 20, and an air flow channel is formed between the cover plate 10 and the main body portion 21 of the current collector plate 20 for the gas inside the energy storage device 100 to flow. Exemplarily, a bottom wall surface of the mounting recess 16 of the cover plate 10 is located at a side facing towards the main body portion 21 of the surface of the boss portion 22 facing away from the main body portion 21.

The second step portion 222 of the boss portion 22 passes through the mounting hole 14. The first sub-portion 222a of the second step portion 222 is mounted in the first sub-hole 141 of the mounting hole 14. Moreover, a circumferential side surface of the first sub-portion 222a is in contact with a wall surface of the first sub-hole 141. The second sub-portion 222b of the second step portion 222 passes through the second sub-hole 142 of the mounting hole 14. It can be understood that by making the diameter of the first sub-hole 141 of the mounting hole 14 gradually decrease and a size of the first sub-portion 222a of the second step portion 222 gradually decrease, a shape of the first sub-portion 222a may be adapted to a shape of the first sub-hole 141, to facilitate alignment and mounting between the current collector plate 20 and the cover plate 10, which is helpful to reduce accuracy requirements of the mounting process.

The first limiting protrusion 13a, the second limiting protrusion 13b, the third limiting protrusion 13c, and the fourth limiting protrusion 13d of the cover plate 10 are arranged opposite to the main body portion 21 of the current collector plate 20 and are arranged offset from each of the explosion-proof valve 30 and the welding groove 23 on the current collector plate 20. In this embodiment, in the thickness direction of the end cover assembly 120, an orthographic projection of each of the first limiting protrusion 13a, the second limiting protrusion 13b, the third limiting protrusion 13c, the fourth limiting protrusion 13d, and the explosion-proof valve 30 on the main body portion 21 of the current collector plate 20 is located between two adjacent welding grooves 23. That is, in the thickness direction of the end cover assembly 120, the explosion-proof hole 15 of the cover plate 10 is arranged opposite to at least one through hole 24 between two adjacent welding grooves 23 and is offset from each welding groove 23 of the current collector plate 20, to make the explosion-proof hole 15 in communication with the inside of the energy storage device 100 through the through hole 24 of the current collector plate 20, realizing exhaust and pressure relief.

It can be understood that when the gas inside the energy storage device 100 impacts the current collector plate 20, the first limiting protrusion 13a, the second limiting protrusion 13b, the third limiting protrusion 13c, and the fourth limiting protrusion 13d may abut with the main body portion 21 of the current collector plate 20 to limit the main body portion 21 of the current collector plate 20 and restrict a movement of the current collector plate 20 towards the cover plate 10, which can prevent the current collector plate 20 from moving towards the cover plate 10 under the action of an airflow, prevent the exhaust channel between the main body portion 21 of the current collector plate 20 and the cover plate 10 from being blocked, and enable the gas inside the energy storage device 100 to smoothly impact the explosion-proof valve, thereby ensuring that the explosion-proof valve 30 can normally open and relieve pressure when the thermal runaway occurs in the energy storage device 100, and thus helping to improve the safety and reliability of the energy storage device 100. In addition, a stable triangular support structure is formed by the first limiting protrusion 13a and the second limiting protrusion 13b in the plurality of limiting protrusions 13 of the cover plate 10, and the first step portion 221 of the current collector plate 20, which can prevent a part of the current collector plate 20 near a cracked side of the explosion-proof valve 30 from approaching the explosion-proof valve 30 and ensure an air-permeability effect on the cracked side of the explosion-proof valve 30, thereby helping to improve exhaust smoothness of the energy storage device 100. Meanwhile, the third limiting protrusion 13c and the fourth limiting protrusion 13d may also form a stable triangular support structure with the first step portion 221, to further enhance a structural strength of the triangular support structure formed by the first limiting protrusion 13a, the second limiting protrusion 13b, and the first step portion 221 and prevent a part of the current collector plate 20 located in a triangular region formed by the first limiting protrusion 13a, the second limiting protrusion 13b, and the first step portion 221 from being recessed towards the cover plate 10. In this way, the blockage of the exhaust channel between the main body portion 21 of the current collector plate 20 and the cover plate 10 can be further avoided, ensuring that the gas inside the energy storage device 100 can be smoothly discharged and impact the explosion-proof valve 30. Further, it can be ensured that the explosion-proof valve 30 normally opens and relieves pressure when the thermal runaway occurs in the energy storage device 100, improving the safety performance of the energy storage device 100.

The present disclosure further provides an electricity-consumption apparatus. The electricity-consumption apparatus includes the above-mentioned energy storage device 100. The energy storage device 100 supplies power to the electricity-consumption apparatus. The electricity-consumption apparatus may be an apparatus that needs power, such as a new energy vehicle, a power storage station, and a server.

While the specific implementations of the present disclosure have been described above, the scope of the present disclosure is not limited to these implementations. Various variants and alternatives easily conceived by those skilled in the art within the technical scope of the present disclosure shall fall within the scope of the present disclosure. Implementations of the present disclosure and features disclosed in the implementations of the present disclosure can be combined with each other without conflicting. Therefore, the scope of present disclosure should be defined by the appended claims.

## Claims

1. An end cover assembly for an energy storage device, the end cover assembly comprising:
a cover plate having a first surface and a second surface that are opposite to each other in a thickness direction of the cover plate, the cover plate having a mounting hole and an explosion-proof hole, the mounting hole and the explosion-proof hole both penetrating the first surface and the second surface in the thickness direction of the cover plate and being spaced apart from each other, the cover plate being further provided with a first limiting protrusion, a second limiting protrusion, a third limiting protrusion, and a fourth limiting protrusion, each of the first limiting protrusion, the second limiting protrusion, the third limiting protrusion, and the fourth limiting protrusion being disposed at the first surface and spaced apart from both the mounting hole and the explosion-proof hole, the first limiting protrusion and the second limiting protrusion being respectively located at two opposite sides of the explosion-proof hole, the third limiting protrusion and the fourth limiting protrusion being respectively located at the two opposite sides of the explosion-proof hole and spaced apart from the first limiting protrusion and the second limiting protrusion, and the third limiting protrusion and the fourth limiting protrusion being respectively located at sides of the first limiting protrusion and the second limiting protrusion facing towards the mounting hole;
an explosion-proof valve mounted at the cover plate and covering the explosion-proof hole, the explosion-proof valve having a center line parallel to a length direction of the explosion-proof valve and passing through the first limiting protrusion and the second limiting protrusion, the explosion-proof valve further comprising a notch portion and a connection portion, the notch portion having a first endpoint and a second endpoint spaced apart from each other, the connection portion being fixedly connected between the first endpoint and the second endpoint and located at a side of the explosion-proof valve away from the mounting hole; and
a current collector plate comprising a main body portion, a first step portion, and a second step portion, the main body portion being located at a side of the first surface facing away from the second surface and arranged opposite to the first limiting protrusion, the second limiting protrusion, the third limiting protrusion, and the fourth limiting protrusion, the main body portion having a first face and a second face that are opposite to each other in a thickness direction of the main body portion, the main body portion having a through hole penetrating the first face and the second face in the thickness direction of the main body portion, the through hole being arranged opposite to the explosion-proof valve and offset from the limiting protrusions, the first step portion being disposed at the first face, a surface of the first step portion facing away from the main body portion abutting the first surface, the first step portion having a greater height than each of the first limiting protrusion, the second limiting protrusion, the third limiting protrusion, and the fourth limiting protrusion, and the second step portion being fixedly connected to the surface of the first step portion facing away from the main body portion and disposed in the mounting hole by passing through the mounting hole.

2. The end cover assembly according to claim 1, wherein:
a first connection line is defined between a center of the first limiting protrusion and a center of the mounting hole;
a second connection line is defined between a center of the second limiting protrusion and the center of the mounting hole;
a third connection line is defined between a center of the third limiting protrusion and the center of the mounting hole;
a fourth connection line is defined between a center of the fourth limiting protrusion and the center of the mounting hole; and
an angle α between the first connection line and the second connection line is smaller than an angle β between the third connection line and the fourth connection line.

3. The end cover assembly according to claim 1, wherein the third limiting protrusion and the fourth limiting protrusion are located on a straight line defined by an edge of the explosion-proof valve adjacent to the mounting hole.

4. The end cover assembly according to any one of claims 1 to 3, wherein the cover plate further has a first groove, a second groove, a third groove, and a fourth groove, wherein:
an opening of each of the first groove, the second groove, the third groove, and the fourth groove is located on the second surface;
the first groove, the second groove, the third groove, and the fourth groove are arranged at intervals from one another and spaced apart from both the mounting hole and the explosion-proof hole; and
in the thickness direction of the cover plate, the first groove is aligned with the first limiting protrusion, the second groove is aligned with the second limiting protrusion, the third groove is aligned with the third limiting protrusion, and the fourth groove is aligned with the fourth limiting protrusion.

5. The end cover assembly according to claim 1, wherein the main body portion further has a welding groove having an opening located on the first face, the welding groove being spaced apart from the through hole, and the welding groove being offset from each of the first limiting protrusion, the second limiting protrusion, the third limiting protrusion, the fourth limiting protrusion, and the explosion-proof valve in a thickness direction of the end cover assembly.

6. The end cover assembly according to claim 5, wherein:
a plurality of through holes and a plurality of welding grooves are provided, the plurality of welding grooves being arranged at intervals around a center of the main body portion, and at least one of the plurality of through holes being disposed between two adjacent welding grooves of the plurality of welding grooves; and
in the thickness direction of the end cover assembly, an orthographic projection of each of the first limiting protrusion, the second limiting protrusion, the third limiting protrusion, the fourth limiting protrusion, and the explosion-proof valve on the main body portion is located between two adjacent welding grooves of the plurality of welding grooves.

7. The end cover assembly according to claim 5 or 6, wherein:
each welding groove comprises a bottom wall and a first sidewall adjacent to the first step portion, the first sidewall being fixedly connected to the bottom wall; and
the main body portion further has a stress relief hole penetrating the main body portion and the first sidewall in the thickness direction of the main body portion.

8. The end cover assembly according to claim 7, wherein:
each welding groove further comprises two second sidewalls that are each fixedly connected to the bottom wall, in a width direction of each welding groove, the two second sidewalls being respectively connected to two opposite sides of the first sidewall; and
the stress relief hole further penetrates corresponding one of the two second sidewalls in the thickness direction of the main body portion.

9. The end cover assembly according to claim 8, wherein a plurality of stress relief holes is provided, every two stress relief holes of the plurality of stress relief holes penetrating the first sidewall of one of the plurality of welding grooves and respectively penetrating the two second sidewalls.

10. An energy storage device, comprising:
a housing having an opening and an accommodation cavity;
an electrode assembly accommodated in the accommodation cavity; and
the end cover assembly according to any one of claims 1 to 9, the opening being sealed by the end cover assembly, and the current collector plate being electrically connected to the electrode assembly.

11. An electricity-consumption apparatus, comprising the energy storage device according to claim 10, the energy storage device being configured to supply power to the electricity-consumption apparatus.
